# EUROPEAN PATENT SPECIFICATION

(11) **EP 2 712 944 B1**
(45) Date of publication and mention of the grant of the patent: **05.09.2018**
(21) Application number: 12785320.8
(22) Date of filing: 16.05.2012
(51) Int. Cl.: C22C 38/00, B21B 3/00, C21D 9/46, C22C 38/06, C22C 38/58, C21D 1/32, C21D 8/02, C21D 6/00, C21D 1/667, C22C 38/02, C22C 38/04, C22C 38/14, C22C 38/18, C22C 38/44, C21D 1/42

(54) **HIGH CARBON THIN STEEL SHEET AND METHOD FOR PRODUCING SAME**
DÜNNES STAHLBLECH MIT HOHEM KOHLENSTOFFGEHALT UND HERSTELLUNGSVERFAHREN DAFÜR
TÔLE D'ACIER MINCE À HAUTE TENEUR EN CARBONE ET SON PROCÉDÉ DE PRODUCTION

(30) Priority: 18.05.2011 JP 2011110918
(43) Date of publication of application: 02.04.2014
(73) Proprietor: JFE Steel Corporation, Tokyo 100-0011 (JP)
(72) Inventor: KOBAYASHI, Takashi, Tokyo 100-0011 (JP); NAKAMURA, Nobuyuki, Tokyo 100-0011 (JP); FUNAKAWA, Yoshimasa, Tokyo 100-0011 (JP)
(74) Representative: Grünecker Patent- und Rechtsanwälte PartG mbB
(86) International application number: PCT/JP2012/003194
(87) International publication number: WO 2012/157268

(56) References cited:
- EP-A1- 1 905 850
- WO-A1-2007/015541
- JP-A- 2007 009 293
- JP-A- 2007 262 487
- JP-A- 2009 149 924
- JP-A- 2010 100 896
- US-A- 5 108 518
- US-A1- 2003 019 550

## Description

### [Technical Field]

The present invention relates to a high carbon steel sheet, in particular a mild high carbon steel sheet containing 0.20 to 0.50 percent by mass of C, and a method for manufacturing the same.

### [Background Art]

In general, high carbon steel sheets are formed into various shapes and, thereafter, are subjected to a heat treatment for enhancing hardness, so as to be used for machine structural parts and the like. Among them, a high carbon steel sheet having a C content of 0.2 to 0.5 percent by mass can have enhanced mildness by being subjected to spheroidizing of cementite and is suitable for a raw material of sheet metal forming.

As for automobile driving system parts, in order to reduce the part production cost, integral forming on the basis of sheet metal forming intended for parts, which have been previously produced by subjecting castings or forgings to secondary forming, e.g., cutting or bonding, has been studied widely, where the sheet metal forming is excellent in productivity. Consequently, a mild high carbon steel sheet containing 0.2 to 0.5 percent by mass of C and having excellent formability has been required as a raw material for such parts, and some technologies have been proposed already.

For example, Patent Literature 1 discloses a method for enhancing the mildness of a medium or high carbon steel sheet, wherein a hot rolled steel sheet of hypo-eutectoid steel containing C: 0.1 to 0.8 percent by mass is subjected to light reduction cold rolling at reduction ratio of more than 15% and 30% or less and, subsequently, is subjected to three-step annealing.

Also, Patent Literature 2 proposes a mild high carbon steel strip having a small heat treatment strain characterized by having a steel composition satisfying C: 0.10% to 0.80%, Si: 0.005% to 0.30%, Mn: 0.20% to 1.60%, sol. Al: 0.005% to 0.100%, N: 0.0010% to 0.0100%, Ti: 0.001% to 0.050%, on a percent by mass basis, and predetermined conditional expressions, wherein an average ferrite grain size and a shape in the steel satisfy predetermined conditional expressions.

In addition, Patent Literature 3 proposes a very mild high carbon hot rolled steel sheet characterized by containing C: 0.2% to 0.7%, Si: 0.01% to 1.0%, Mn: 0.1% to 1.0%, P: 0.03% or less, S: 0.035% or less, Al: 0.08% or less, N: 0.01% or less, and the remainder composed of Fe and incidental impurities, on a percent by mass basis, and having a microstructure in which the ferrite average grain size is 20 µm or more, the volume ratio of ferrite grains having grain sizes of 10 µm or more is 80% or more, and the average grain size of carbides (cementite) is 0.10 µm or more and less than 2.0 µm. Furthermore, Patent Literature 4 discloses a high carbon cold-rolled steel sheet having both excellent stretch-flange formability and excellent homogeneity of hardness in the sheet thickness direction provided by a manufacturing method having the steps of: hot-rolling a steel containing 0.2 to 0.7% C by mass at finishing temperatures of (Ar3 transformation point - 20°C) or above to prepare a hot-rolled sheet; cooling the hot-rolled sheet to temperatures of 650°C or below at cooling rates from 60°C/s or larger to smaller than 120°C/s; coiling the hot-rolled sheet after cooling at coiling temperatures of 600°C or below; cold-rolling the coiled hot-rolled sheet at rolling reductions of 30% or more to prepare a cold-rolled sheet; and annealing the cold-rolled sheet at annealing temperatures from 600°C or larger to Ac1 transformation point or lower.

### [Citation List]

### [Patent Literature]

[PTL 1] Japanese Unexamined Patent Application Publication No. 11-29823
[PTL 2] Japanese Unexamined Patent Application Publication No. 2001-220642
[PTL 3] Japanese Unexamined Patent Application Publication No. 2007-277696
[PTL 4] European Application EP1905850 A1

### [Summary of Invention]

### [Technical Problem]

However, technologies described in Patent Literatures 1 to 3 have problems as described below.

That is, the method for enhancing the mildness of a medium or high carbon steel sheet described in Patent Literature 1 is to enhance the mildness by subjecting a hot rolled steel sheet to light reduction cold rolling at a reduction ratio of more than 15% and 30% or less and, then, annealing, so as to facilitate recrystallization during annealing because of forming strain. Although a relatively large amount of strain is introduced into the surface layer portion of the steel sheet, which is a material to be rolled, by the light reduction cold rolling at a small reduction ratio, only a small amount of strain is introduced into the sheet thickness central portion, so that the distribution of the introduced rolling strain becomes nonuniform in the sheet thickness direction. Consequently, the steel sheet after annealing also has nonuniform microstructure and characteristic in the sheet thickness direction easily. In addition, the annealing after the cold rolling is composed of three steps including the combination of heating in specific temperature ranges just below and just above the Ac₁ transformation point, so that the temperature control during annealing is complicated and, from this point of view as well, nonuniformity occurs in the steel sheet characteristics easily.

Meanwhile, the technology described in Patent Literature 2 is to obtain a steel sheet in which the average ferrite grain size is more than 35 µm and less than 100 µm and ferrite grains have predetermined expanded shapes by hot-rolling and coiling steel having a predetermined composition under a predetermined condition, and performing box annealing under the condition of the hydrogen concentration in the atmosphere of 90% or more, where cold rolling at a reduction ratio of 5% to 30% may be further combined. Therefore, so-called hydrogen annealing is necessary and practical annealing equipment is limited. In this regard, in the case where the cold rolling at a reduction ratio of 5% to 30% is combined, as described above, the distribution of the introduced rolling strain becomes nonuniform in the sheet thickness direction and, thereby, the steel sheet after annealing has nonuniform microstructure and characteristic in the sheet thickness direction easily.

The technology described in Patent Literature 3 is to obtain a steel sheet having a microstructure including ferrite and carbides having predetermined grain sizes by roughly rolling the steel having a predetermined microstructure, performing finish rolling in which the reduction ratio of final pass is specified to be 10% or more and the finishing temperature is specified to be higher than or equal to (Ar₃ - 20°C), performing cooling and coiling under a predetermined condition, and performing box annealing after pickling. In contrast to the above-described related art, this technology intends to enhance the mildness of the steel sheet by limiting the final pass condition of the hot rolling without employing light reduction cold rolling and, thereby, enhancing a grain growth driving force during spheroidizing. However, cooling to a temperature of 600°C or lower at a cooling rate of more than 120°C/sec is necessary after the finish rolling. Therefore, execution is not possible unless equipment having very high cooling capacity is available and, in addition, characteristics of the resulting steel sheet also become nonuniform easily because cooling variations exert an influence easily.

It is an object of the present invention to provide a mild high carbon steel sheet containing 0.20 to 0.50 percent by mass of C, being homogeneous in the sheet thickness direction, and having excellent formability and a method for manufacturing the same.

### [Solution to Problem]

The present inventors performed intensive research on the above-described high carbon steel sheet and, as a result, found the following.
i) It is possible to enhance the mildness and the homogeneity in the sheet thickness direction at the same time by allowing a microstructure to be composed of ferrite and cementite, increasing the grain size of ferrite and the grain size of cementite after annealing to appropriate sizes, and making the grain size distribution of ferrite in the sheet thickness direction uniform.
ii) In addition, degradation in formability can be suppressed by increasing the spheroidizing ratio of cementite and the proportion of cementite present inside ferrite grains.
iii) For that purpose, it is effective that, in cooling of the steel sheet after hot rolling, cooling is performed with two-step cooling pattern, in which gradual cooling is performed in a high temperature zone and then strong cooling is performed for a short time and, subsequently, annealing is performed after application of the cold rolling at a small reduction ratio.

The present invention has been made on the basis of the above-described findings and provides a mild high carbon steel sheet as defined in claim 1.

Preferably, the above-described Si content is 0.1% or more and 0.5% or less on a percent by mass basis. Preferably, the above-described Mn content is 0.2% or more and 1.0% or less on a percent by mass basis.

Preferably, the above-described cementite has an average grain size of 1.0 µm or more and 3.0 µm or less. The spheroidizing ratio of the above-described cementite is a ratio of the number of cementite grains having a cross-sectional aspect ratio, which is major axis/minor axis, of 3 or less to the number of all cementite grains. Preferably, the mild high carbon steel sheet has a Vickers hardness of 150 or less.

The high carbon steel sheet according to the present invention can be manufactured with a method as specified in claim 4. Preferably, the average cooling rate of the above-described secondary cooling is 120°C/sec or more and 300°C/sec or less.

Preferably, the holding time of the above-described annealing temperature is 30 hours or more and 50 hours or less.

### [Advantageous Effects of Invention]

According to the present invention, it becomes possible to produce a mild high carbon steel sheet containing 0.20 to 0.50 percent by mass of C, being uniform in the sheet thickness direction, and having excellent formability.

### [Description of Embodiments]

The reasons for limiting the high carbon steel sheet according to the present invention and the method for manufacturing the same will be described below in detail.

### (1) Chemical composition

Hereafter, the unit % of the content of component element refers to percent by mass.

### C: 0.20% to 0.50%

Carbon is an element indispensable for enhancing the strength after hardening. If the amount of C is less than 0.20%, the strength required of a machine structural part is not obtained. On the other hand, if the amount of C is more than 0.50%, the steel sheet has excessively high strength after the annealing, the formability is degraded and, in addition, embrittlement and a dimensional error of a part after hardening are caused. Therefore, the content of C is limited to 0.20% to 0.50%, and preferably 0.25% to 0.45%.

### Si: 0.1% to 0.5%

Silicon has a function of deoxidizing steel and a function of enhancing the resistance to temper softening after hardening. In order to obtain these functions, the Si content is preferably 0.1% or more. However, if Si is excessively contained, the strength of the steel sheet is excessively enhanced and the surface quality of the steel sheet is degraded, so that the Si content is limited to between 0.1% and 0.5%, preferably 0.3% or less.

### Mn: 2.0% or less

Manganese has a function of enhancing hardenability and a function of enhancing the resistance to temper softening after hardening. In order to obtain these functions, the content is specified to be preferably 0.2% or more, and the content is specified to be further preferably 0.3% or more. However, if Mn is excessively contained, significant degradation in the formability of the steel sheet is caused. Therefore, the content of Mn is limited to 2.0% or less, preferably 1.0% or less, and further preferably 0.8% or less.

### P: 0.03% or less

Phosphorus degrades the formability of the steel sheet and the toughness after the heat treatment. Therefore, the content of P is limited to 0.03% or less, and preferably 0.02% or less.

### S: 0.02% or less

Sulfur degrades the formability of the steel sheet and the toughness after the heat treatment. Therefore, the content of S is limited to 0.02% or less, and preferably 0.01% or less.

### Sol.Al: 0.08% or less

Aluminum is an element added for deoxidizing steel and can be contained as necessary. However, addition of Al in such a way that the amount of sol.Al exceeds 0.08% causes an increase of inclusions and causes degradation in formability of the steel sheet. Therefore, the content of sol.Al is limited to 0.08% or less, and preferably 0.04% or less. Meanwhile, in the case where the steel sheet is held at a high temperature, AlN is formed in the steel, growth of austenite crystal grains during austenitization is suppressed, and the hardenability may be degraded. In particular, in the case where the steel sheet is held at a high temperature in a nitrogen atmosphere, the above-described influence becomes remarkable easily by N which enters the steel from the atmosphere. In order to avoid such degradation in hardenability resulting from formation of AlN, it is necessary that the amount of sol.Al be 0.08% or less. The amount of sol.Al is preferably less than 0.04%, and further preferably the amount of sol.Al is specified to be less than 0.01%.

### N: 0.02% or less

If a large amount of N is contained, AlN may be formed and, thereby, the hardenability may be degraded. Therefore, the content of N is limited to 0.02% or less, and preferably 0.01% or less.

The remainder is specified to be Fe and incidental impurities. However, in order to improve the hardenability and/or the resistance to temper softening, at least one selected from the group consisting of Cr: 0.1% to 1.5%, Mo: 0.1% to 0.5%, Ni: 0.1% to 1.0%, Ti: 0.01% to 0.03%, Nb: 0.01% to 0.03%, V: 0.01% to 0.03%, and B: 0.0005% to 0.0050% can be further contained. At this time, if the contents are less than the lower limits of the individual elements, the effects thereof are not obtained sufficiently. Meanwhile, if the contents are more than the upper limits, an increase in the production cost is caused and, in addition, the formability and/or the toughness may be degraded.

### (2) Microstructure

### Phase configuration: ferrite and cementite

The high carbon steel sheet according to the present invention has a microstructure composed of ferrite and spheroidized cementite in order to improve the formability because of enhanced mildness.

Average grain size ds of ferrite in region from surface of steel sheet to position at one-quarter of sheet thickness and average grain size dc of ferrite in region from position at one-quarter of sheet thickness to sheet thickness center: 20 to 40 µm each

Coarsening of ferrite grains contributes to enhance mildness significantly. However, if the average grain size of the ferrite is less than 20 µm, enhancement of mildness is insufficient. On the other hand, if the average grain size of the ferrite is more than 40 µm, a defect in surface quality, which is so-called orange peel, occurs easily during forming. Therefore, each of the average grain size ds of the ferrite in the region from the surface of the steel sheet to the position at one-quarter of the sheet thickness and the average grain size dc of the ferrite in the region from the position at one-quarter of the sheet thickness of the steel sheet to the sheet thickness center is specified to be 20 to 40 µm.

Average grain size distribution of ferrite in sheet thickness direction: the average grain size ds of the ferrite in the region from the surface of the steel sheet to the position at one-quarter of the sheet thickness and the average grain size dc of the ferrite in the region from the position at one-quarter of the sheet thickness of the steel sheet to the sheet thickness center satisfies 0.80 ≤ ds/dc ≤ 1.20

If the average grain size of the ferrite in the sheet thickness direction becomes nonuniform, deformation of the part after forming and a heat treatment increases easily. Therefore, 0.80 ≤ ds/dc ≤ 1.20 is employed.

### Average grain size of cementite: 1.0 µm or more

If the average grain size of the cementite is less than 1.0 µm, enhancement of mildness becomes insufficient. However, if cementite becomes too coarse, the degree of concentration of stress around coarse cementite grains increases during forming, degradation in formability may be caused and, in addition, re-formation of solid solution of C along with decomposition of cementite during austenitization is suppressed. Therefore, the average grain size of the cementite is desirably 3.0 µm or less.

In this regard, the grain size of cementite refers to a geometric mean value of the major axis and the minor axis of cementite in an observation visual field of a predetermined steel sheet cross-section, and the average grain size of cementite refers to an arithmetic mean value of the individual cementite grain sizes.

### Spheroidizing ratio of cementite: 90% or more

If the spheroidization of cementite is insufficient and the spheroidizing ratio is less than 90%, a large amount of tabular cementite remains and the formability is degraded significantly. Therefore, the spheroidizing ratio of the cementite is specified to be 90% or more.

In this regard, the spheroidizing ratio of the cementite refers to the ratio of the number of cementite grains having a cross-sectional aspect ratio (major axis/minor axis) of 3 or less to the number of all cementite grains in an observation visual field of a predetermined steel sheet cross-section.

### Ratio of the number of grains of cementite present inside ferrite grains: 90% or more

The cementite in the steel sheet according to the present invention is spheroidized sufficiently, and the average grain size is a large 1.0 µm or more. If a large amount of such cementite is present at grain boundaries of ferrite, the cementite serves as a starting point of breakage easily when being subjected to forming, so that the formability is degraded. Therefore, it is necessary that 90% or more of cementite, on a ratio of the number of grains to the total number of cementite grains basis, be present inside ferrite grains.

### (3) Production condition

The high carbon steel sheet according to the present invention is obtained by hot-rolling a steel slab having the above-described chemical composition at a finishing temperature higher than or equal to the Ar₃ transformation point, performing primary cooling to a primary cooling stop temperature of 550°C to 650°C at an average cooling rate of 25°C/sec to 50°C/sec, then performing secondary cooling to a secondary cooling stop temperature of 500°C to 600°C at an average cooling rate of 120°C/sec or more for a cooling time of 1 s or less, performing coiling, removing scale on the steel sheet surface layer, then performing cold rolling at a reduction ratio of 20% to 30%, and performing annealing by holding for 20 hours or more at an annealing temperature of 680°C or higher and lower than the Ac₁ transformation point.

The hot rolling step also plays a role in adjusting the microstructure prior to the following mildness enhancing treatment, in which cold rolling and annealing are combined, and is a step necessary and important for facilitating homogenization in the sheet thickness direction after the mildness enhancing treatment. The mildness enhancing treatment composed of light reduction cold rolling and annealing is a treatment to facilitate coarsening of ferrite grains by utilizing strain-induced grain growth due to a strain introduced on the basis of cold rolling and is a step responsible for enhancing mildness of the steel sheet. Although relatively much strain is introduced into the surface layer portion of the steel sheet, which is a material to be rolled, by the light reduction cold rolling at a small reduction ratio, strain is not introduced into the central portion of the sheet thickness easily. Consequently, a difference in the effect of facilitating ferrite grain growth occurs between the surface layer portion and the central portion, and the grain size distribution of ferrite and characteristics of the steel sheet become nonuniform.

In the present invention, in order to avoid heterogeneity in the sheet thickness direction resulting from the light reduction cold rolling, a specific microstructure distribution is formed in advance in the steel sheet after the hot rolling. In the case where the cementite in the surface layer portion is made finer than the cementite in the sheet thickness central portion in the hot rolled steel sheet, ferrite grain growth in the surface layer portion is suppressed as compared with that in the sheet thickness central portion during annealing after the cold rolling, and the nonuniformity of the ferrite grain size distribution resulting from nonuniform introduction of rolling strain is eliminated.

In order to change the cementite grain size of the hot rolled steel sheet in the sheet thickness direction, it is necessary to make the temperature histories of the surface layer portion and the central portion different from each other during the cooling process after the finish rolling. For that purpose, it is effective to perform two-step cooling, that is, to perform cooling with a pattern of high temperature zone gradual cooling-short time strong cooling, in such a way that, in a temperature zone in which the second phase containing cementite precipitates, cooling is performed to strongly cool only the surface layer portion for a very short time and, in a temperature zone on the higher temperature side, gradual cooling is performed to homogenize formation of a microstructure other than the second phase.

The reasons for limiting the individual production conditions set on the basis of the above-described concept will be described below.

### Hot rolling finishing temperature: higher than or equal to Ar₃ transformation point

If the hot rolling finishing temperature is lower than the Ar₃ transformation point, a microstructure in which a rolling texture remains is formed after the hot rolling, and the homogeneity in the sheet thickness direction after the annealing is degraded. Therefore, the finishing temperature is specified to be higher than or equal to the Ar₃ transformation point.

In this regard, the Ar₃ transformation point can be determined from, for example, an inflection point on the basis of a measurement of a heat shrinkage curve during the cooling process from an austenite temperature zone. Alternatively, it is also possible to roughly calculate from the contents of chemical components.

Primary cooling after hot rolling: cooling to cooling stop temperature of 550°C to 650°C at average cooling rate of 25°C/sec to 50°C/sec

The steel sheet after the hot rolling is immediately primarily cooled to a cooling stop temperature of 550°C to 650°C at an average cooling rate of 25°C/sec to 50°C/sec. This is because if the average cooling rate is less than 25°C/sec or more than 50°C/sec, it becomes difficult to form a predetermined microstructure distribution, described later, after the hot rolling, the ferrite grain size distribution in the sheet thickness direction after the annealing becomes nonuniform, and the homogeneity in the sheet thickness direction is not attained.

Meanwhile, if the cooling stop temperature is higher than 650°C, the microstructure after the hot rolling is coarsened easily, and a predetermined microstructure distribution after the hot rolling is not obtained easily. If the temperature is lower than 550°C, hard phases, e.g., bainite and martensite, are generated, the steel sheet becomes too strong, so that a coil shape during coiling and operability may be degraded, and the steel sheet shape becomes worse so that cooling variations may be caused.

After the primary cooling, secondary cooling is performed on an as-is basis. It is desirable that the time interval after the primary cooling up to start of the secondary cooling be 3 sec or less to suppress excessive recuperation, and 1 sec or less is more desirable.

Secondary cooling after hot rolling: cooling to cooling stop temperature of 500°C to 600°C at average cooling rate of 120°C/sec or more for cooling time of 1 sec or less

The steel sheet after the primary cooling is cooled to a cooling stop temperature of 500°C to 600°C at an average cooling rate of 120°C/sec or more within 1 sec or less and is coiled.

In the case of cooling by common pouring of water, the temperature zone of 500°C to 600°C is a zone in which transition from film boiling to nucleate boiling starts, so that cooling variations in the steel sheet occur easily. In such a temperature zone, cooling variations in the steel sheet do not occur easily when accelerated water-cooling is performed under a nucleate boiling-dominated condition in such a way that the average cooling rate becomes 120°C/sec or more. The accelerated water-cooling at an average cooling rate of 240°C/sec or more is more preferable.

In this regard, in the case where the accelerated water-cooling is performed for a short cooling time of 1 sec or less, in the steel sheet surface layer portion after the cooling, pearlite having a small lamellar spacing or bainite is generated as a second phase, spherical cementite grains formed during annealing become small, and ferrite grain growth is suppressed. On the other hand, in the sheet central portion, pearlite having a somewhat large lamellar spacing is generated, spherical cementite grains formed during annealing become somewhat large as compared with those in the surface layer portion, and the effect of suppressing ferrite grain growth is reduced. Consequently, the ferrite grain size distribution in the sheet thickness direction becomes uniform, and the homogeneity in the sheet thickness direction is attained. If the cooling time is more than 1 sec, the temperature distribution in the sheet thickness direction after the cooling becomes uniform easily, and predetermined microstructure distribution is not obtained easily. The cooling time is preferably 0.5 sec or less.

Meanwhile, if the cooling stop temperature is more than 600°C, coarse pearlite is easily generated after the cooling, and it becomes difficult to form the predetermined microstructure distribution after the annealing. On the other hand, if the cooling stop temperature is lower than 500°C, large amounts of hard phases, e.g., bainite and martensite, are generated, and the steel sheet becomes too strong, so that a coil shape during coiling and operability are degraded.

### Cold rolling reduction ratio: 20% to 30%

The coiled steel sheet is subjected to pickling or the like to remove scale on the steel sheet surface layer and, thereafter, is cold-rolled in order to realize the enhancement of mildness of the steel sheet due to strain-induced grain growth during the annealing described next. At this time, if the reduction ratio is less than 20%, a sufficient effect of accelerating grain growth is not obtained, and if the reduction ratio is more than 30%, ferrite grains become fine. Therefore, the cold rolling reduction ratio is limited to 20% to 30%.

### Annealing: holding for 20 hours or more at annealing temperature of 680°C or higher and lower than Ac₁ transformation point

The steel sheet after the cold rolling is annealed to facilitate spheroidization of cementite and coarsening of ferrite grains. At this time, if the annealing temperature is lower than 680°C, the spheroidization of cementite and the coarsening of ferrite grains do not proceed smoothly, and if the annealing temperature is higher than or equal to the Ac₁ transformation point, austenite is partly generated during annealing, and pearlite, that is, cementite not spheroidized, becomes present together after the annealing, so that the formability and the hardenability are degraded. Therefore, the annealing temperature is limited to within the range of 680°C or higher and lower than the Ac₁ transformation point, and preferably 690°C or higher and (Ac₁ transformation point - 5°C) or lower.

It is necessary that the holding time at the annealing temperature be 20 hours or more in order to achieve the spheroidization of cementite and the coarsening of ferrite grains, and 30 to 50 hours is desirable.

Meanwhile, in the case where coalescence and/or growth of ferrite crystal grains is sufficiently accelerated by the annealing under the above-described predetermined condition, much of cementite present at ferrite crystal grain boundaries before the annealing is taken into coalesced and/or grown crystal grains, and after the annealing, 90% or more of cementite, on a ratio of the number of grains basis, become present inside ferrite grains as intragranular cementite.

In this regard, the Ac₁ transformation point can be determined from, for example, an inflection point on the basis of a measurement of a thermal expansion curve during the heating process from ambient temperature. Alternatively, it is also possible to roughly calculate from the contents of chemical components.

The steel sheet after the annealing can be subjected to temper rolling, as necessary, to correct the shape or adjust the surface quality.

Either a converter or an electric furnace can be employed for melting the high carbon steel used in the present invention. The melted steel is made into a steel slab (billet) by continuous casting or blooming after ingot making. The steel slab can undergo improvements, e.g., scarfing, as necessary. The steel slab before the hot rolling may be heated to a temperature at which a predetermined finishing temperature can be ensured in accordance with the capacity of the production equipment. The continuously cast steel slab may be hot-rolled directly or after a short time of heating without being cooled to ambient temperature. Alternatively, it is also possible that a former steel slab is heated by an induction heating apparatus, e.g., a bar heater or an edge heater, midway through the hot rolling.

### [EXAMPLES]

Steel slabs A to K having chemical compositions shown in Table 1, where the remainder was composed of Fe and incidental impurities, were made into hot rolled steel sheets having a sheet thickness of 4.0 mm under the hot rolling condition shown in Table 2. Thereafter, scale on the steel sheet surface layer was removed by pickling. Subsequently, the resulting hot rolled steel sheets were cold-rolled under the cold rolling condition shown in Table 2, and were annealed under the annealing condition also shown in Table 2, so as to obtain Steel sheets 1 to 25. In this regard, the Ar₃ transformation point and the Ac₁ transformation point shown in Table 1 were determined by rough calculation from the chemical compositions of the steel on the basis of the following formulae.
Ar₃ transformation point (°C) = 910 - 203[C]^{1/2} + 44.7[Si] - 30.0[Mn] - 11.0[Cr] + 31.5[Mo] - 15.2[Ni]
Ac₁ transformation point (°C) = 727 - 29.1[Si] - 10.7[Mn] + 16.9[Cr] - 16.9[Ni]
Here, [C], [Si], [Mn], [Cr], [Mo], and [Ni] represent contents (percent by mass) of C, Si, Mn, Cr, Mo, and Ni, respectively.

A sample was taken from each of the resulting steel sheets, and the average grain size ds of the ferrite in the region from the steel sheet surface to the position at one-quarter of the sheet thickness, the average grain size dc of the ferrite in the region from the position at one-quarter of the sheet thickness to the sheet thickness center, the average grain size of the cementite, the spheroidizing ratio of the cementite, and the ratio of the number of cementite grains present inside ferrite grains were measured. The measurements were performed by using a microstructure photograph of each of the positions of the surface layer portion, the position at one-eighth of the sheet thickness, the position at one-quarter of the sheet thickness, the position at three-eighths of the sheet thickness, and the sheet thickness central portion, where a photograph was taken with a scanning electron microscope at a magnification of 500 to 3,000 times after a sheet thickness cross-section parallel to the steel sheet rolling direction of the sample was mirror-polished and was corroded with nital or picral. At this time, the nital corrosion photograph taken at each of the above-described positions was used, the grain size was determined in conformity with the method specified in Japanese Industrial Standards JIS G 0552, and the average grain size of the ferrite was calculated from the grain size number. The average grain size ds of the ferrite in the region from the steel sheet surface to the position at one-quarter of the sheet thickness was an average of the average grain sizes calculated at the surface layer portion, the position at one-eighth of the sheet thickness, and the position at one-quarter of the sheet thickness, and the average grain size dc of the ferrite in the region from the position at one-quarter of the sheet thickness to the sheet thickness center was an average of the average grain sizes calculated at the position at one-quarter of the sheet thickness, the position at three-eighths of the sheet thickness, and the sheet thickness central portion. In this regard, each of the positions of the surface layer portion, the position at one-eighth of the sheet thickness, the position at one-quarter of the sheet thickness, and the position at three-eighths of the sheet thickness was observed with reference to both the surface and the back of the steel sheet. Meanwhile, the average grain size of the cementite, the spheroidizing ratio of the cementite, and the ratio of the number of cementite grains present inside ferrite grains were measured at the position at one-quarter of the sheet thickness, while the picral corrosion photograph was used in combination.

Also, the degree of the mildness and the homogeneity in the sheet thickness direction of the steel sheet were evaluated by mirror-polishing a sheet thickness cross-section parallel to the steel sheet rolling direction of the sample and measuring the Vickers hardness at the position at one-eighth of the sheet thickness and the position at three-eighths of the sheet thickness in conformity with the method specified in Japanese Industrial Standards JIS Z 2244 with a test forth of 9.8 N (1 kgf). At this time, at least five points of Vickers hardnesses were measured at each position and an average value thereof was specified to be HV. The HV at the position at one-eighth of the sheet thickness was taken as HVs, and the HV at the position at three-eighths of the sheet thickness was taken as HVc. Then, the case where the HVs and the HVc were 150 or less was specified to be mild, and the case where the difference ΔHV between the HVs and the HVc was 5 or less was specified to be excellent in the homogeneity in the sheet thickness direction.

As for the formability of the steel sheet, the limit deformability was evaluated by performing a hole expanding test in conformity with Japanese Industrial Standards JIS Z 2256. At this time, in the case where the hole expanding ratio was 30% or more, the formability was evaluated as sufficient.

The results are shown in Table 3.

It is clear that the steel sheet according to the present invention is a mild high carbon steel sheet having a small ΔHV exhibiting homogeneity in the sheet thickness direction and having excellent formability. On the other hand, the steel sheet according to the comparative example has a large ΔHV exhibiting heterogeneity in the sheet thickness direction, insufficient mildness or poor formability.

### [Table 1]

**[Table 1]**

| (percent by mass) | | | | | | | | | | | |
|---|---|---|---|---|---|---|---|---|---|---|---|
| Steel slab | C | Si | Mn | P | S | sol. Al | N | Others | Ar₃ transformation point (°C) | Ac₁ transformation point (°C) | Remarks |
| A | 0.21 | 0.2 | 0.4 | 0.01 | 0.004 | 0.03 | 0.003 | - | 814 | 717 | within the present invention |
| B | 0.21 | 0.1 | 0.2 | 0.01 | 0.005 | 0.02 | 0.003 | Ti:0.02, B:0.003 | 813 | 723 | within the present invention |
| C | 0.33 | 0.2 | 0.8 | 0.02 | 0.007 | 0.01 | 0.002 | - | 778 | 713 | within the present invention |
| D | 0.35 | 0.3 | 0.7 | 0.02 | 0.006 | 0.04 | 0.002 | Cr:0.2 | 781 | 713 | within the present invention |
| E | 0.35 | 0.2 | 0.8 | 0.02 | 0.007 | 0.002 | 0.005 | - | 781 | 721 | within the present invention |
| F | 0.36 | 0.1 | 0.3 | 0.01 | 0.008 | 0.03 | 0.002 | - | 784 | 721 | within the present invention |
| G | 0.35 | 0.3 | 0.6 | 0.02 | 0.008 | 0.03 | 0.002 | Cr:1.0, Mo:0.2, Ni:0.1 | 779 | 727 | within the present invention |
| H | 0.41 | 0.3 | 1.5 | 0.03 | 0.006 | 0.05 | 0.004 | - | 748 | 702 | within the present invention |
| I | 0.44 | 0.2 | 0.7 | 0.02 | 0.005 | 0.003 | 0.005 | - | 763 | 714 | within the present invention |
| J | 0.49 | 0.2 | 0.7 | 0.02 | 0.006 | 0.08 | 0.002 | - | 756 | 714 | within the present invention |
| K | 0.51 | 0.3 | 0.8 | 0.02 | 0.009 | 0.04 | 0.003 | - | 754 | 710 | out of the present invention |

### [Table 2]

**[Table 2]**

| Steel sheet | Steel slab | Hot rolling condition | | | | | | Cold rolling condition | Annealing condition | |
|---|---|---|---|---|---|---|---|---|---|---|
| | | Finishing temperature (°C) | Average primary cooling rate (°C/sec) | Primary cooling stop temperature (°C) | Average secondary cooling rate (°C/sec) | Secondary cooling time (sec) | Secondary cooling stop temperature (°C) | Reduction ratio (%) | Temperature (°C) | Time (hr) |
| 1 | A | 880 | 40 | 650 | 240 | 0.4 | 600 | 20 | 715 | 40 |
| 2 | B | 880 | 50 | 650 | 240 | 0.5 | 580 | 20 | 715 | 45 |
| 3 | C | 860 | 40 | 620 | 180 | 0.5 | 560 | 25 | 710 | 30 |
| 4 | C | 760 | 30 | 620 | 180 | 0.5 | 560 | 25 | 710 | 30 |
| 5 | C | 780 | 20 | 640 | 180 | 0.4 | 600 | 25 | 710 | 30 |
| 6 | C | 860 | 60 | 560 | 180 | 0.5 | 500 | 25 | 710 | 30 |
| 7 | C | 860 | 40 | 620 | 180 | 0.5 | 560 | 18 | 710 | 30 |
| 8 | C | 860 | 40 | 620 | 180 | 0.5 | 560 | 32 | 710 | 30 |
| 9 | C | 860 | 40 | 620 | 180 | 0.5 | 560 | 25 | 710 | 15 |
| 10 | D | 860 | 30 | 640 | 120 | 1.0 | 540 | 25 | 710 | 20 |
| 11 | E | 860 | 40 | 620 | 180 | 0.5 | 560 | 25 | 715 | 25 |
| 12 | E | 860 | 40 | 540 | 180 | 0.3 | 520 | 25 | 715 | 25 |
| 13 | E | 860 | 40 | 660 | 180 | 0.6 | 580 | 25 | 715 | 25 |
| 14 | F | 860 | 40 | 620 | 180 | 0.7 | 560 | 25 | 715 | 25 |
| 15 | F | 860 | 40 | 620 | 180 | 0.7 | 560 | 25 | 670 | 40 |
| 16 | F | 860 | 40 | 620 | 180 | 0.7 | 560 | 25 | 730 | 20 |
| 17 | G | 840 | 40 | 600 | 150 | 0.8 | 560 | 25 | 710 | 50 |
| 18 | H | 840 | 40 | 580 | 150 | 0.4 | 600 | 30 | 700 | 35 |
| 19 | I | 840 | 35 | 580 | 150 | 0.5 | 540 | 30 | 710 | 40 |
| 20 | I | 840 | 35 | 580 | 100 | 0.5 | 560 | 30 | 710 | 40 |
| 21 | I | 840 | 35 | 580 | 120 | 1.2 | 500 | 30 | 710 | 40 |
| 22 | I | 840 | 35 | 580 | 150 | 1.0 | 480 | 30 | 710 | 40 |
| 23 | I | 840 | 25 | 640 | 150 | 0.5 | 620 | 30 | 710 | 40 |
| 24 | J | 820 | 25 | 550 | 120 | 0.6 | 540 | 25 | 680 | 50 |
| 25 | K | 820 | 25 | 550 | 120 | 0.6 | 540 | 30 | 680 | 50 |

### [Table 3]

**[Table 3]**

| Steel sheet | Microstructure* | | | | | | | Hardness | | | Formability | Remarks |
|---|---|---|---|---|---|---|---|---|---|---|---|---|
| | Phase | ds of F (µm) | dc of F (µm) | ds/dc | Average grain size of C (µm) | Spheroidizing ratio of C (%) | Ratio of the number of C grains inside F grains (%) | HVs | HVc | ΔHV | Hole expanding ratio λ (%) | |
| 1 | F,C | 40 | 34 | 1.18 | 2.2 | 96 | 97 | 117 | 120 | 3 | 45 | invention example |
| 2 | F,C | 33 | 32 | 1.03 | 1.8 | 90 | 94 | 121 | 122 | 1 | 43 | invention example |
| 3 | F,C | 31 | 29 | 1.07 | 1.3 | 92 | 92 | 133 | 136 | 3 | 39 | invention example |
| 4 | F,C | 42 | 24 | 1.75 | 1.4 | 93 | 88 | 129 | 138 | 9 | 24 | comparative example |
| 5 | F,C | 37 | 29 | 1.28 | 1.4 | 88 | 89 | 131 | 138 | 7 | 28 | comparative example |
| 6 | F,C | 33 | 27 | 1.22 | 0.9 | 87 | 87 | 134 | 139 | 5 | 26 | comparative example |
| 7 | F,C | 18 | 19 | 0.95 | 1.2 | 87 | 82 | 143 | 142 | 1 | 27 | comparative example |
| 8 | F,C | 15 | 17 | 0.88 | 1.1 | 89 | 83 | 145 | 144 | 1 | 25 | comparative example |
| 9 | F,C | 28 | 26 | 1.08 | 1.9 | 86 | 90 | 139 | 142 | 3 | 28 | comparative example |
| 10 | F,C | 30 | 28 | 1.07 | 1.1 | 96 | 95 | 136 | 139 | 3 | 41 | invention example |
| 11 | F,C | 32 | 28 | 1.14 | 1.3 | 93 | 93 | 132 | 135 | 3 | 40 | invention example |
| 12 | F,C | 32 | 26 | 1.23 | 0.8 | 88 | 88 | 134 | 139 | 5 | 29 | comparative example |
| 13 | F,C | 38 | 30 | 1.27 | 1.4 | 89 | 87 | 130 | 137 | 7 | 27 | comparative example |
| 14 | F,C | 34 | 31 | 1.10 | 1.3 | 96 | 95 | 129 | 130 | 1 | 42 | invention example |
| 15 | F,C | 29 | 25 | 1.16 | 2.6 | 82 | 86 | 141 | 143 | 2 | 24 | comparative example |
| 16 | F,P,C | 18 | 17 | 1.06 | 3.6 | 77 | 73 | 148 | 149 | 1 | 21 | comparative example |
| 17 | F,C | 28 | 25 | 1.12 | 1.0 | 95 | 91 | 137 | 139 | 2 | 37 | invention example |
| 18 | F,C | 27 | 23 | 1.17 | 1.1 | 92 | 92 | 140 | 142 | 2 | 36 | invention example |
| 19 | F,C | 25 | 22 | 1.14 | 1.1 | 91 | 93 | 143 | 146 | 3 | 35 | invention example |
| 20 | F,C | 28 | 23 | 1.22 | 1.2 | 90 | 91 | 138 | 146 | 8 | 31 | comparative example |
| 21 | F,C | 26 | 21 | 1.24 | 1.1 | 88 | 90 | 141 | 149 | 8 | 29 | comparative example |
| 22 | F,C | 21 | 18 | 1.17 | 0.7 | 90 | 88 | 150 | 155 | 5 | 28 | comparative example |
| 23 | F,C | 27 | 22 | 1.23 | 2.4 | 89 | 91 | 140 | 147 | 7 | 26 | comparative example |
| 24 | F,C | 24 | 20 | 1.20 | 1.0 | 91 | 90 | 146 | 149 | 3 | 31 | invention example |
| 25 | F,C | 23 | 19 | 1.21 | 0.9 | 86 | 87 | 147 | 152 | 5 | 25 | comparative example |

| | | | | | | | | | | | | |
|---|---|---|---|---|---|---|---|---|---|---|---|---|
| *: F ferrite, C cementite, P pearlite | | | | | | | | | | | | |

## Claims

1. A mild high carbon steel sheet **characterized by** having
a chemical composition consisting of, on a percent by mass basis:
C: 0.20% to 0.50%,
Si: 0.1% to 0.5%,
Mn: 2.0% or less,
P: 0.03% or less,
S: 0.02% or less,
sol.Al: 0.08% or less,
N: 0.02% or less, and optionally at least one selected from the group consisting of:
Cr: 0.1% to 1.5%,
Mo: 0.1% to 0.5%,
Ni: 0.1% to 1.0%,
Ti: 0.01% to 0.03%,
Nb: 0.01% to 0.03%,
V: 0.01% to 0.03%, and
B: 0.0005% to 0.0050% and
the remainder composed of Fe and incidental impurities, on a percent by mass basis, and
a microstructure composed of ferrite and cementite, wherein each of the average grain size ds of the ferrite in the region from the surface of the steel sheet to the position at one-quarter of the sheet thickness and the average grain size dc of the ferrite in the region from the position at one-quarter of the sheet thickness of the steel sheet to the sheet thickness center is 20 to 40 µm, 0.80 ≤ ds/dc ≤ 1.20 is satisfied, the average grain size of the cementite is 1.0 µm or more, a spheroidizing ratio is 90% or more, wherein the spheroidizing ratio of the cementite is a ratio of the number of cementite grains having a cross-sectional aspect ratio, which is major axis/minor axis, of 3 or less to the number of all cementite grains, wherein 90% or more of cementite, on a ratio of the number of grains basis, is present inside ferrite grains, and wherein the steel sheet has Vickers hardness of 150 or less.

2. The mild high carbon steel sheet according to Claim 1, wherein the Mn content is 0.2% or more and 1.0% or less on a percent by mass basis.

3. The mild high carbon steel sheet according to Claim 1, wherein the cementite has an average grain size of 1.0 µm or more and 3.0 µm or less.

4. A method for manufacturing a mild high carbon steel sheet **characterized by** consisting of the steps of hot-rolling a steel slab having a chemical composition consisting of, on a percent by mass basis:
C: 0.20% to 0.50%,
Si: 0.1% to 0.5%,
Mn: 2.0% or less,
P: 0.03% or less,
S: 0.02% or less,
sol.Al: 0.08% or less,
N: 0.02% or less, and optionally at least one selected from the group consisting of Cr: 0.1% to 1.5%,
Mo: 0.1% to 0.5%,
Ni: 0.1% to 1.0%,
Ti: 0.01% to 0.03%,
Nb: 0.01% to 0.03%,
V: 0.01% to 0.03%, and
B: 0.0005% to 0.0050%
and the remainder composed of Fe and incidental impurities, at a finishing temperature higher than or equal to the Ar3 transformation point, performing primary cooling to a primary cooling stop temperature of 550°C to 650°C at an average cooling rate of 25°C/sec to 50°C/sec, performing secondary cooling to a secondary cooling stop temperature of 500°C to 600°C at an average cooling rate of 120°C/sec or more for a cooling time of 1 s or less, wherein the interval between primary and secondary cooling is 3 s or less, performing coiling, removing scale on the steel sheet surface layer, performing cold rolling at a reduction ratio of 20% to 30%, and performing annealing by holding for 20 hours or more at an annealing temperature of 680°C or higher and lower than the Ac₁ transformation point.

5. The method for manufacturing a mild high carbon steel sheet according to Claim 4, wherein the average cooling rate of the secondary cooling is 120°C/sec or more and 300°C/sec or less.

6. The method for manufacturing a mild high carbon steel sheet according to Claim 4 or 5, wherein the holding time of the annealing temperature is 30 hours or more and 50 hours or less.

## Patentansprüche

1. Weichstahlblech mit hohem Kohlenstoffanteil, **dadurch gekennzeichnet, dass** es eine chemische Zusammensetzung aufweist, die auf Massenprozentbasis aus Folgendem besteht:
C: 0,20 % bis 0,50 %,
Si: 0,1 % bis 0,5 %,
Mn: 2,0 % oder weniger,
P: 0,03 % oder weniger,
S: 0,02 % oder weniger,
sol. Al: 0,08 % oder weniger,
N: 0,02 % oder weniger, und optional mindestens einem, das aus der Gruppe gewählt wird, die aus Folgendem besteht:
Cr: 0,1 % bis 1,5 %,
Mo: 0,1 % bis 0,5 %,
Ni: 0,1 % bis 1,0 %,
Ti: 0,01 % bis 0,03 %,
Nb: 0,01 % bis 0,03 %,
V: 0,01 % bis 0,03 %, und
B: 0,0005 % bis 0,0050 %, und
wobei der Rest aus Fe und zufälligen Verunreinigungen besteht, auf einer Massenprozent Basis, und
eine Mikrostruktur, die aus Ferrit und Zementit besteht, wobei jeweils die durchschnittliche Korngröße ds des Ferrits in dem Bereich von der Oberfläche des Stahlblechs bis zu einer Position auf einem Viertel der Blechdicke und die durchschnittliche Korngröße dc des Ferrits in der Region von der Position auf einem Viertel der Blechdicke bis zu der Blechdickenmitte 20 bis 40 µm beträgt, 0,80 ≤ ds/dc ≤ 1,20 erfüllt ist, die durchschnittliche Korngröße des Zementits 1,0 µm oder mehr beträgt, einen Kugelgraphitbildungsverhältnis 90 % oder mehr beträgt, wobei das Kugelgraphitbildungsverhältnis des Zementits ein Verhältnis der Zementitkörner mit einem Querschnitt-AspektVerhältnis, wobei es sich um die Hauptachse/Nebenachse handelt, von 3 oder weniger zu der Anzahl aller Zementitkörner ist, wobei 90 % oder mehr des Zementits auf Basis eines Verhältnisses der Anzahl der Körner in den Ferritkörnern vorhanden ist, und wobei das Stahlblech eine Vickershärte von 150 oder weniger aufweist.

2. Weichstahlblech mit hohem Kohlenstoffanteil nach Anspruch 1, wobei der Mn-Gehalt 0,2 % oder mehr und 1,0 % oder weniger auf einer Massenprozentbasis beträgt.

3. Weichstahlblech mit hohem Kohlenstoffanteil nach Anspruch 1, wobei das Zementit eine durchschnittliche Korngröße von 1,0 µm oder mehr und 3,0 µm oder weniger aufweist.

4. Herstellungsverfahren für ein Weichstahlblech mit hohem Kohlenstoffanteil, **dadurch gekennzeichnet, dass** es aus den Schritten zum Warmwalzen einer Stahlbramme mit einer chemischen Zusammensetzung besteht, die auf Massenprozentbasis aus Folgendem besteht:
C: 0,20 % bis 0,50 %,
Si: 0,1 % bis 0,5 %,
Mn: 2,0 % oder weniger,
P: 0,03 % oder weniger,
S: 0,02 % oder weniger,
sol. Al: 0,08 % oder weniger,
N: 0,02 % oder weniger, und optional mindestens einem, das aus der Gruppe gewählt wird, die aus Folgendem besteht:
Cr: 0,1 % bis 1,5 %,
Mo: 0,1 % bis 0,5 %,
Ni: 0,1 % bis 1,0 %,
Ti: 0,01 % bis 0,03 %,
Nb: 0,01 % bis 0,03 %,
V: 0,01 % bis 0,03 %, und
B: 0,0005 % bis 0,0050 %
wobei der Rest aus Fe und zufälligen Verunreinigungen besteht, bei einer Endbearbeitungstemperatur von höher als oder gleich dem Ar3-Transformationspunkt, Durchführen von primärem Abkühlen auf eine primäre Abkühlungsstopptemperatur von 550 °C bis 650 °C bei einer durchschnittlichen Abkühlungsgeschwindigkeit von 25 °C/Sek bis 50 °C/Sek, Durchführen von sekundärem Abkühlen auf eine sekundäre Abkühlungsstopptemperatur von 500 °C bis 600 °C bei einer durchschnittlichen Abkühlungsgeschwindigkeit von 120 °C/Sek oder mehr für eine Abkühlungszeit von 1 Sek oder weniger, wobei das Intervall zwischen dem primären und dem sekundären Abkühlen 3 Sek oder weniger beträgt, Durchführen von Aufwickeln, Entfernen von Zunder auf der Stahlblechoberflächenschicht, Durchführen von Kaltwalzen bei einem Reduktionsverhältnis von 20 % bis 30 %, und Durchführen von Glühen durch Halten für 20 Stunden oder mehr bei einer Glühtemperatur von 680 °C oder mehr und niedriger als der Ac₁-Transformationspunkt.

5. Herstellungsverfahren für ein Weichstahlblech mit hohem Kohlenstoffanteil nach Anspruch 4, wobei die durchschnittliche Abkühlungsgeschwindigkeit des sekundären Abkühlens 120 °C/Sek oder mehr und 300 °C/Sek oder weniger beträgt.

6. Herstellungsverfahren für ein Weichstahlblech mit hohem Kohlenstoffanteil nach Anspruch 4 oder 5, wobei die Haltezeit der Glühtemperatur 30 Stunden oder mehr und 50 Stunden oder weniger beträgt.

## Revendications

1. Tôle d'acier doux à haute teneur en carbone **caractérisée en ce qu'**elle présente une composition chimique constituée, sur une base de pourcentage massique, de :
C : 0,20 % à 0,50 %,
Si : 0,1 % à 0,5 %,
Mn : 2,0 % ou moins,
P : 0,03 % ou moins,
S : 0,02 % ou moins,
Al. sol. : 0,08 % ou moins,
N : 0,02 % ou moins, et éventuellement l'un au moins choisi dans le groupe constitué par :
Cr : 0,1 % à 1,5 %,
Mo : 0,1 % à 0,5 %,
Ni : 0,1 % à 1,0 %,
Ti : 0,01 % à 0,03 %,
Nb : 0,01 % à 0,03 %,
V : 0,01 % à 0,03 % et
B : 0,0005 % à 0,0050 % et
le reste étant composé de Fe et d'impuretés inévitables, sur une base de pourcentage massique, et
une microstructure composée de ferrite et cémentite, où chacune de la grosseur de grain moyenne ds de la ferrite dans la région allant de la surface de la tôle d'acier à la position située à un quart de l'épaisseur de tôle et de la grosseur de grain moyenne dc de la ferrite dans la région allant de la position située à un quart de l'épaisseur de tôle de la tôle d'acier jusqu'au centre de l'épaisseur de tôle va de 20 à 40 µm, 0,80 ≤ ds/dc ≤ 1,20 est satisfait, la grosseur de grain moyenne de la cémentite est de 1,0 µm ou plus, un taux de sphéroïdisation est de 90 % ou plus, le taux de sphéroïdisation de la cémentite étant un rapport du nombre de grains de cémentite ayant un rapport d'aspect en section transversale, qui est l'axe majeur sur l'axe mineur, de 3 ou moins au nombre de tous les grains de cémentite, où 90 % ou plus de la cémentite, sur la base d'un rapport du nombre de grains, se trouvent à l'intérieur de grains de ferrite, et où la tôle d'acier a une dureté Vickers de 150 ou moins.

2. Tôle d'acier doux à haute teneur en carbone selon la revendication 1, dans laquelle la teneur en Mn est de 0,2 % ou plus et de 1,0 % ou moins sur une base de pourcentage massique.

3. Tôle d'acier doux à haute teneur en carbone selon la revendication 1, dans laquelle la cémentite a une grosseur de grain moyenne de 1,0 µm ou plus et 3,0 µm ou moins.

4. Procédé de fabrication d'une tôle d'acier doux à haute teneur en carbone **caractérisé en ce qu'**il est constitué des étapes consistant à laminer à chaud une brame d'acier ayant une composition chimique constituée, sur une base de pourcentage massique, de :
C : 0,20 % à 0,50 %,
Si : 0,1 % à 0,5 %,
Mn : 2,0 % ou moins,
P : 0,03 % ou moins,
S : 0,02 % ou moins,
Al. sol. : 0,08 % ou moins,
N : 0,02 % ou moins, et éventuellement au moins l'un choisi dans le groupe constitué par :
Cr : 0,1 % à 1,5 %,
Mo : 0,1 % à 0,5 %,
Ni : 0,1 % à 1,0 %,
Ti : 0,01 % à 0,03 %,
Nb : 0,01 % à 0,03 %,
V : 0,01 % à 0,03 % et
B : 0,0005 % à 0,0050 % et
le reste étant composé de Fe et d'impuretés inévitables, à une température de finissage supérieure ou égale au point de transformation Ar3, effectuer un refroidissement primaire jusqu'à une température d'arrêt de refroidissement primaire de 550 °C à 650 °C à une vitesse de refroidissement moyenne de 25 °C/s à 50 °C/s, effectuer un refroidissement secondaire jusqu'à une température d'arrêt de refroidissement secondaire de 500 °C à 600 °C à une vitesse de refroidissement moyenne de 120 °C/s ou plus pendant une durée de refroidissement de 1 s ou moins, l'intervalle entre le refroidissement primaire et secondaire étant de 3 s ou moins, effectuer un enroulement, retirer la calamine sur la couche de surface de la tôle d'acier, effectuer un laminage à froid à un taux de réduction de 20 % à 30 % et effectuer un recuit par maintien pendant 20 heures ou plus à une température de recuit de 680 °C ou plus et inférieure au point de transformation Ac₁.

5. Procédé de fabrication d'une tôle d'acier doux à haute teneur en carbone selon la revendication 4, dans lequel la vitesse de refroidissement moyenne du refroidissement secondaire est de 120 °C/s ou plus et 300 °C/s ou moins.

6. Procédé de fabrication d'une tôle d'acier doux à haute teneur en carbone selon la revendication 4 ou 5, dans lequel le temps de maintien de la température de recuit est de 30 heures ou plus et 50 heures ou moins.
